# EUROPÄISCHE PATENTANMELDUNG

(11) **EP 3 287 994 A1**
(43) Veröffentlichungstag der Anmeldung: **28.02.2018**
(21) Anmeldenummer: 17020372.3
(22) Anmeldetag: 18.08.2017
(51) Int. Cl.: G07G 1/00, G06Q 20/32, G06Q 20/20

(54) **MODUL UND VERFAHREN ZUM BESCHLEUNIGEN UND VEREINFACHEN DES KASSENPROZESSES DURCH SELF-SCANNING, INSBESONDERE FÜR EINZELHANDELSMÄRKTE**

(30) Priorität: 22.08.2016 DE 102016010199
(71) Anmelder: Scansation GmbH, 81379 München (DE)
(72) Erfinder: Klett, Andreas, 81379 München (DE)

(57) **Zusammenfassung**

Self-Scanning-System und -Verfahren zum Beschleunigen und Vereinfachen des Kassenprozesses.

Im Einzelhandel wurden bisher unterschiedliche Self-Scanning-Ansätze realisiert. Aktuelle Verfahren arbeiten mit mobilen, beim Markt ausleihbaren Scangeräten, die aber hohe Anschaffungs- und Integrationskosten haben. Weiterentwickelte Ansätze bedienen sich der Smartphones der Kunden als Handscannerersatz, benötigen aber für den Bezahlvorgang Mechanismen, die aufwendig in die IT-Landschaft des Marktes zu integrieren sind. Das neue System nutzt ebenfalls Kundensmartphones zur Erfassung und ermöglicht eine triviale Integration in die bestehende IT-Landschaft durch Nutzung existierender Schnittstellen.

Als Übertragungsmöglichkeit der gesammelten Artikelidentifikationsnummern generiert das Smartphone (14) des Kunden (28) einen 2D-Code. Dieser wird durch den Kassierer (29) mittels 2D-Handscanner der Scanerweiterungs-Hardware (9) erfasst und an den Minicomputer der Scanerweiterungs-Hardware (8) übertragen. Hier werden die empfangenen Daten verarbeitet, gespeichert und die wesentlichen Informationen (Artikelidentifikationsnummern mit Häufigkeiten) über eine Kassensystemschnittstelle (7), bspw. Tastatur- und Scannerschnittstelle, an das bestehende Kassensystem (4) gesendet. Dieses übernimmt dann wie heute den eigentlichen Bezahlvorgang.

## Beschreibung

Die Erfindung betrifft ein System und ein Verfahren zum Beschleunigen und Vereinfachen des Kassenprozesses in Groß- bzw. Einzelhandelsmärkten oder in der Gastronomie, das es Kunden ermöglicht, die Barcode-Symbole von einzukaufenden Artikeln mit ihrem eigenen Smartphone einzuscannen (Self-Scanning) und die Artikel anschließend an eine übliche Marktkasse (Point of Sale) zu übermitteln. Insbesondere betrifft die Erfindung ein System und Verfahren zum Beschleunigen und Vereinfachen des Kassenprozesses durch Self-Scanning, insbesondere für Einzelhandelsmärkte.

Groß- bzw. Einzelhandelsunternehmen sind sehr an effizienten und innovativen Lösungen für den Kassenprozess interessiert. Vor allem die Wartezeiten an den Kassen in Groß- bzw. Einzelhandelsmärkten sollen reduziert werden, da sie von Kunden als besonders störend empfunden werden. Auch das Einsparen von Kosten für Kassenpersonal und Kasseninfrastruktur, das Sammeln von relevanten Daten über das Einkaufsverhalten der Kunden, neue Marketingmöglichkeiten und vor allem ein besserer Service für den Kunden sind wichtig.

Bei einem typischen Kassenprozess im Groß- bzw. Einzelhandel muss ein Kunde alle Artikel, die er erwerben möchte, einem Kassierer einzeln vorlegen, z.B. indem er alle Artikel aus seiner Einkaufstasche auf einem Kassenband platziert. Anschließend scannt der Kassierer das Barcode-Symbol jedes Artikels einzeln sequentiell ein, z.B. mit einem mit dem Kassensystem verbundenen stationären Scanner oder einem tragbaren Handscanner. Durch den Scanvorgang wird das Barcode-Symbol dekodiert, der Artikel identifiziert und eine Artikelidentifikationsnummer des Artikels an das Kassensystem gesendet. Möglicherweise muss der Kassierer noch zusätzliche Tätigkeiten vornehmen, z.B. Artikel wie Obst abwiegen oder für Artikel wie Alkohol eine Altersprüfung durchführen. Wurden die Barcode-Symbole aller Artikel von dem Kassierer gescannt und die zugehörigen Artikel an das Kassensystem übermittelt, so wird von diesem der Gesamtpreis berechnet und der Kunde bezahlt für seinen Einkauf, z.B. durch Barzahlung, Kartenzahlung oder neuartige mobile Bezahlmethoden. Außerdem muss der Kunde alle Artikel wieder entgegennehmen und in seine Einkaufstasche einräumen. Dieser Prozess ist aufwändig und umständlich und insbesondere das sequentielle Aufnehmen und Scannen jedes einzelnen Artikels durch den Kassierer kann viel Zeit beanspruchen. Dies kann zu langen Wartezeiten für Kunden an der Kasse, Kundenunzufriedenheit und finanziellen Einbußen für das Groß- bzw. Einzelhandelsunternehmen führen.

Zur Lösung dieser Probleme wurden Verfahren entwickelt, bei denen die Kunden die einzukaufenden Artikel selbst einscannen können, sog. Self-Scanning, so dass das Scannen nicht mehr von einem Kassierer übernommen werden muss. Vor allem sind hier unterschiedliche Varianten von Selbstbedienungssystemen, sog. Self-Checkout-Systeme zu nennen.

Eine bekannte Variante solcher Systeme sind Selbstbedienungsterminals mit Scanfunktion, die eine normale Kasse vollständig ersetzen können. An einem solchen Terminal wird ein Scanner zur Verfügung gestellt, mit dem Kunden die Barcode-Symbole ihrer Artikel an dem Terminal selbst einzeln einscannen können. Meist kann der Kunde dann auch direkt an dem Terminal bezahlen. Auch wenn ein solches System Personalkosten sparen kann, da das Scannen nicht mehr von einem Kassierer vorgenommen wird, behebt es das Problem der Wartezeiten an der Kasse nicht, da ein Kunde nach dem anderen alle Artikel einzeln an dem Terminal scannen muss. Häufig verlängern sich die Wartezeiten an solchen Selbstbedienungsterminals sogar, da ein Kunde weniger Erfahrung im Scannen von Artikeln hat und daher mehr Zeit benötigt als ein Kassierer.

Um das sequentielle Scannen der einzelnen Artikel an der Kasse zu vermeiden, sind Systeme bekannt, bei denen der Kunde das Barcode-Symbol eines Artikels bereits am Ort des Artikels im Markt scannen kann. Bei einer bekannten Variante eines solchen Systems wird dem Kunden ein dem Groß- bzw. Einzelhandelsmarkt gehörendes spezielles mobiles Scangerät ausgehändigt, z.B. an einem für diese Geräte eingerichteten Aufladegestell mit Anmeldeterminal. Mit diesen Geräten können die Barcode-Symbole der Artikel von den Kunden parallel während des Einkaufens eingescannt werden. Das Gerät bildet einen digitalen Warenkorb, der auch bearbeitet werden kann. Hat der Kunde alle einzukaufenden Artikel schon während der Warenauswahl im Markt eingescannt, so muss z.B. an einem Kassenterminal nur noch der Warenkorb übermittelt und anschließend bezahlt werden. Dabei muss der Kunde das Scangerät des Marktes wieder zurückgeben. Ein solches System bietet für das Groß- bzw. Einzelhandelsunternehmen neben der Zeitersparnis an der Kasse einen neuen Marketingkanal über das mobile Scangerät und neuartige Daten über das Einkaufsverhalten der Kunden. Außerdem entfällt für den Kunden das stressige Aus- und Einpacken seiner Einkaufstasche oder seines Einkaufswagens an dem Kassenterminal und der Markt kann dem Kunden über das Gerät weitere Services wie Einkaufshilfen zur Verfügung stellen. Der große Nachteil an dem beschriebenen System ist, dass der Markt die Scangeräte für die Kunden zur Verfügung stellen muss. Die Kosten für Anschaffung, Einrichtung und Wartung von Scangeräten und Aufladegestellen ist für typische Groß- bzw. Einzelhandelsunternehmen zu hoch.

Zur Lösung des im letzten Absatz beschriebenen Problems haben sich verschiedene Varianten eines solchen Systems entwickelt, bei denen der Kunde anstatt der vom Markt bereitgestellten Scangeräte sein eigenes Smartphone oder ein ähnliches selbst mitgebrachtes mobiles elektronisches Gerät mit integrierter Kamera nutzt. Hierfür stellt der Systemanbieter eine spezielle mobile App zum Herunterladen bereit. Diese mobile App muss von dem Kunden auf seinem Smartphone installiert werden. Sie ermöglicht dann ähnliche Funktionalitäten wie das oben angesprochene dedizierte Scangerät. Der Kunde kann mit seinem Smartphone mit installierter App also während des Einkaufens im Markt Barcode-Symbole von Artikeln über die Kamera des Smartphones einscannen und die gescannten Artikel anschließend in einem digitalen Warenkorb speichern und verwalten. Schließlich muss der Einkauf noch bezahlt werden. Hierfür sind für Systeme dieser Art zwei verschiedene Kassenprozesse bekannt.

Die erste Möglichkeit besteht darin, ein speziell für das System eingerichtetes Kassenterminal im Markt aufzubauen. Der Kunde muss seinen digitalen Warenkorb von seinem Smartphone an das Terminal übertragen. Für die Übertragung der Daten gibt es wiederum unterschiedliche technische Umsetzungen, z.B. Übertragung über eine Onlineverbindung oder mittels eines Scanvorgangs an dem Terminal. Schließlich kann der Kunde an dem Terminal mit verschiedenen Zahlungsmöglichkeiten den Einkauf bezahlen und abschließen.

Die zweite Möglichkeit ist eine unmittelbare Online-Bezahlung mit dem Smartphone. Die Bezahlung des Gesamtpreises des Warenkorbs kann z.B. über einen Online-Zahldienst eines Drittanbieters per Knopfdruck auf dem Smartphone erfolgen. Der bezahlte Warenkorb muss dabei noch über eine speziell eingerichtete Online-Verbindung im Warenwirtschaftssystem des Groß- bzw. Einzelhandelsmarktes verbucht werden. Der Kunde muss dabei nicht mehr zwingend eine Kasse aufsuchen.

Ein großes Problem der im letzten Absatz beschriebenen Ansätze ist, dass in beiden Fällen ein erheblicher Eingriff in die Infrastruktur eines Marktes notwendig ist. Im ersten Fall müssen eigene Kassenterminals im Markt an geeigneten Stellen aufgebaut und in die IT-Landschaft des Marktes eingebunden werden. Im zweiten Fall muss ein Online-Bezahlsystem und die Möglichkeit von Online-Buchungen und Online-Rechnungen in die IT-Infrastruktur des Marktes integriert werden. Außerdem muss der Markt sicherstellen, dass jeder Kunde an der Kasse eine Online-Verbindung hat. Groß- bzw. Einzelhandelsmärkte scheuen die Kosten und Risiken derartiger Eingriffe in ihre Infrastruktur. Dies ist ein wichtiger Grund dafür, dass Self-Scanning-Systeme, bei denen die Artikel mit dem eigenen Smartphone des Kunden eingescannt werden und das Scannen durch einen Kassierer somit nicht mehr notwendig ist, bisher noch eine geringe Verbreitung haben.

Der Erfindung liegt die Aufgabe zugrunde, ein Self-Scanning-System der beschriebenen Art, bei dem der Kunde die einzukaufenden Artikel mit seinem eigenem Smartphone oder einem ähnlichen vom Kunden selbst mitgebrachten, mobilen elektronischen Gerät scannt, zu schaffen, das die genannten Nachteile vermeidet, indem eine dritte Möglichkeit für den Kassenprozess entwickelt wird, die keine Änderung der bestehenden Infrastruktur eines Marktes erfordert und trotzdem die eingangs dargestellten Vorteile bietet.

Nach der Erfindung besteht ein solches System aus
- einem, mit einer entsprechenden Software ausgestatteten, vom Kunden selbst mitgebrachten, mobilen elektronischen Gerät, welches eingerichtet ist
   - zum Einscannen von Barcode-Symbolen von Artikeln durch eine Geräte-Kamera
   - zum Dekodieren der eingescannten Barcode-Symbole, um jeweilige Artikelidentifikationsnummern der Artikel zu erhalten
   - zum Speichern und Verwalten der Artikelidentifikationsnummern in einem digitalen Warenkorb
   - zum Kodieren von mehreren verschiedenen Artikelidentifikationsnummern mit der Anzahl der zur jeweiligen Artikelidentifikationsnummer gehörenden Artikel des Warenkorbs in mindestens einem 2D-Code
   - und zum Anzeigen der 2D-Codes auf einem Geräte-Bildschirm;
- sowie einem Scanerweiterungs-Modul für Kassensysteme, wobei das Scanerweiterungs-Modul mit einer Schnittstelle ausgestattet ist, die so ausgebildet ist, dass sich das Scanerweiterungs-Modul über übliche, bestehende Kassensystem-Schnittstellen an gewöhnliche Kassensysteme anschließen lässt oder bereits im Kassensystem integriert ist und das Scanerweiterungs-Modul eingerichtet ist
   - zum Einscannen und Dekodieren der 2D-Codes vom mobilen elektronischen Gerät des Kunden durch eine Scaneinheit
   - zum Verarbeiten der in den 2D-Codes enthaltenen Informationen durch eine Berechnungseinheit
   - zum Senden der in den 2D-Codes
      enthaltenen Artikelidentifikationsnummern und der Anzahl der einzelnen Artikel an das Kassensystem in der von der Kasse erwarteten Form durch die Berechnungseinheit
   - zum Persistieren von Daten durch eine Speichereinheit
   - und zum Auslesen der Daten über eine zusätzliche Datenschnittstelle.

Das System zur Beschleunigung und Vereinfachung des Kassenprozesses durch Self-Scanning in Groß- und Einzelhandelsmärkten und in der Gastronomie besteht aus:
- einem, mit einer entsprechenden Software ausgestatteten, vom Kunden selbst mitgebrachten, mobilen elektronischen Gerät, welches eingerichtet ist
   - zum Einscannen von Barcode-Symbolen von Artikeln durch eine Geräte-Kamera
   - zum Dekodieren der eingescannten Barcode-Symbole, um jeweilige Artikelidentifikationsnummern der Artikel zu erhalten
   - zum Speichern und Verwalten der Artikelidentifikationsnummern in einem digitalen Warenkorb
   - zum Kodieren von mehreren verschiedenen Artikelidentifikationsnummern mit der Anzahl der zur jeweiligen Artikelidentifikationsnummer gehörenden Artikel des Warenkorbs in mindestens einem 2D-Code
   - und zum Anzeigen der 2D-Codes auf einem Geräte-Bildschirm;
- sowie einem Scanerweiterungs-Modul für Kassensysteme, wobei das Scanerweiterungs-Modul mit einer Schnittstelle ausgestattet ist, die so ausgebildet ist, dass sich das Scanerweiterungs-Modul über übliche, bestehende Kassensystem-Schnittstellen an gewöhnliche Kassensysteme anschließen lässt oder bereits im Kassensystem integriert ist und das Scanerweiterungs-Modul eingerichtet ist
   - zum Einscannen und Dekodieren der 2D-Codes vom mobilen elektronischen Gerät des Kunden durch eine Scaneinheit
   - zum Verarbeiten der in den 2D-Codes enthaltenen Informationen durch eine Berechnungseinheit
   - zum Senden der in den 2D-Codes
      enthaltenen Artikelidentifikationsnummern und der Anzahl der einzelnen Artikel an das Kassensystem in der von der Kasse erwarteten Form durch die Berechnungseinheit
   - zum Persistieren von Daten durch eine Speichereinheit
   - und zum Auslesen der Daten über eine zusätzliche Datenschnittstelle.
- Nach einer Ausführungsform des Systems ist das mobile elektronische Gerät ein Smartphone oder ein Tablet oder eine Smartwatch oder ein Smart-Glass in Kombination mit einem Smartphone oder Tablet oder ein ähnliches tragbares Gerät mit Kamera und Bildschirm.
- Nach der Erfindung ist ein System gemäß einer weiteren Ausführungsform vorgesehen, wobei zusätzlich das mobile elektronische Gerät weitere Informationen für die Kasse, z.B. über eine Kunden-Treuekarte, in dem 2D-Code kodiert und das Scanerweiterungs-Modul diese Informationen dekodiert und in der von der Kasse erwarteten Form an das Kassensystem sendet und/oder das mobile elektronische Gerät weitere Informationen für Datenauswertungszwecke, z.B. eine Einkaufs-Identifikationsnummer, in dem 2D-Code kodiert und das Scanerweiterungs-Modul diese Informationen dekodiert, die Informationen persistiert und ein Auslesen über die zusätzliche Datenschnittstelle ermöglicht.
- Nach einer weiteren Ausführungsform kodiert das mobile elektronische Gerät die Daten in mehrere 2D-Codes und zeigt die Vielzahl von 2D-Codes simultan und/oder nacheinander an und das Scanerweiterungs-Modul scannt die Vielzahl der 2D-Codes ein und dekodiert sie.
- Gemäß einer Ausführungsform ist die Kassensystem-Schnittstelle, an die das Scanerweiterungs-Modul angeschlossen wird, vorzugsweise eine Schnittstelle für einen Kassensystem-Handscanner und/oder eine Kassensystem-Tastatur, und das Scanerweiterungs-Modul kann neben einer Bedienkasse auch an eine Selbstbedienungskasse angeschlossen werden.
- System gemäß einer weiteren Ausführungsform ist vorgesehen, wobei die Scaneinheit des Scanerweiterungs-Moduls ein Handscanner oder ein stationärer Scanner oder ein anderer elektrooptischer Scanner mit Scannersensor ist.
- System gemäß einer Ausführungsform der Erfindung ist vorgesehen, wobei die Berechnungseinheit und die Speichereinheit des Scanerweiterungs-Moduls als Minicomputer oder als eine in den Scanner integrierte Rechnerkomponente oder als ein ähnlicher Rechner mit den notwendigen Schnittstellen, wobei die Datenschnittstelle vorzugsweise eine Netzwerkschnittstelle ist, gestaltet sind oder die Berechnungseinheit und die Speichereinheit nicht als Bestandteil des Scanerweiterungs-Moduls, sondern als Softwareerweiterung des gewöhnlichen Kassensystems realisiert werden.
- Ein Verfahren zur Beschleunigung und Vereinfachung des Kassenprozesses in Groß-und Einzelhandelsmärkten und in der Gastronomie durch ein Self-Scanning-System ist vorgesehen, wobei das Self-Scanning-System umfasst:
   - ein, mit einer entsprechenden Software ausgestattetes, vom Kunden selbst mitgebrachtes, mobiles elektronisches Gerät
   - sowie ein Scanerweiterungs-Modul für Kassensysteme, wobei das Scanerweiterungs-Modul mit einer Schnittstelle ausgestattet ist, die so ausgebildet ist, dass sich das Scanerweiterungs-Modul über übliche, bestehende Kassensystem-Schnittstellen an gewöhnliche Kassensysteme anschließen lässt oder bereits im Kassensystem integriert ist und das Verfahren umfassend:
   - Einscannen von Barcode-Symbolen von Artikeln durch das mobile elektronische Gerät,
   - Dekodieren der eingescannten Barcode-Symbole, um jeweilige Artikelidentifikationsnummern der Artikel zu erhalten durch das mobile elektronische Gerät,
   - Speichern und Verwalten der Artikelidentifikationsnummern in einem digitalen Warenkorb durch das mobile elektronische Gerät,
   - Kodieren von mehreren verschiedenen Artikelidentifikationsnummern mit der Anzahl der zur jeweiligen Artikelidentifikationsnummer gehörenden Artikel des Warenkorbs in mindestens einem 2D-Code durch das mobile elektronische Gerät
   - Anzeigen der 2D-Codes mit dem mobilen elektronischen Gerät,
   - Einscannen und Dekodieren der 2D-Codes vom mobilen elektronischen Gerät durch das Scanerweiterungs-Modul,
   - Verarbeiten der in den 2D-Codes enthaltenen Informationen durch das Scanerweiterungs-Modul,
   - Senden der in den 2D-Codes enthaltenen Artikelidentifikationsnummern und der Anzahl der einzelnen Artikel an das Kassensystem in der von der Kasse erwarteten Form durch das Scanerweiterungs-Modul,
   - Persistieren von Daten durch das Scanerweiterungs-Modul,
   - Auslesen der Daten aus dem Scanerweiterungs-Modul
- Ein Verfahren unter Verwendung eines Self-Scanning-Systems ist vorgesehen.

Die Erfindung beruht demnach insbesondere auf einem Plug&Play-Scanerweiterungs-Modul für Kassensysteme, das es ermöglicht, das bestehende Kassensystem eines Marktes im Kontext des Self-Scannings mit kundeneigenen Smartphones weiterhin zur Bezahlung zu nutzen, so dass sich am Bezahlvorgang keine Änderung für den Markt ergibt. Das Plug&Play-Scanerweiterungs-Modul kann wie z.B. ein Kassensystem-Handscanner und/oder eine Kassensystem-Tastatur über die dafür vorgesehenen Schnittstellen an ein beliebiges Kassensystem angeschlossen werden ohne das Kassensystem zu manipulieren. Alternativ ist das Scanerweiterungs-Modul bereits als Softwarekomponente in das Kassensystem integriert.

Gemäß einem weiteren Aspekt nutzt das erfindungsgemäße System Kundensmartphones zur Erfassung, und ermöglicht gleichzeitig eine einfache Integration in bestehende Kassensysteme durch Nutzung existierender Schnittstellen.

Die im Folgenden aufgezählten Vorteile der Erfindung machen die großen Unterschiede zu anderen ähnlichen Systemen noch einmal deutlich. Die Erfindung eignet sich insbesondere für den Einsatz in Groß- bzw. Einzelhandelsmärkten mit vielen Kunden und großen Warenkörben.
- Der Groß- bzw. Einzelhandelsmarkt muss keine neuen oder zusätzlichen Kassensysteme oder Terminals aufbauen. Er vermeidet damit hohe Kosten und zusätzlichen Platzbedarf.
- Der Groß- bzw. Einzelhandelsmarkt muss seine IT-Infrastruktur und seine Kasseninfrastruktur nicht ändern. Er vermeidet dadurch hohe Umrüstungsaufwände und große Risiken für den reibungslosen Betrieb der Infrastruktur.
- Die Investitionskosten zur Einführung des Systems sind für den Groß- bzw. Einzelhandelsmarkt sehr gering, da sie auf die Anschaffung der Scanerweiterungen begrenzt sind.
- Eine Einrichtung des Systems in einem Groß- bzw. Einzelhandelsmarkt ist in kürzester Zeit möglich, indem das Plug&Play-Scanerweiterungs-Modul an eine bestehende Kasse wie ein zusätzlicher Handscanner angeschlossen wird.
- Es besteht keine Notwendigkeit, dass das Smartphone des Kunden im Groß- bzw. Einzelhandelsmarkt eine Online-Verbindung hat. Es ist daher für den Markt nicht notwendig ein Kunden-WLAN einzurichten und sich mit möglichen Verbindungsproblemen auseinander zu setzen. Allerdings kann ein Online-Zugang trotzdem sinnvoll sein, z.B. zum Abrufen der aktuellen Preise, um den Kunden jederzeit über den Gesamtpreis seines Warenkorbs zu informieren.

- Der Kunde des Groß- bzw. Einzelhandelsmarktes kann anonym bleiben, denn bei keinem der Prozessschritte wird die genaue Identität des Kunden benötigt. Dies ist vielen Endkunden wichtig.
- Das System bietet höchstmögliche Flexibilität, da an einer Kasse parallel Kunden, die das hier vorgestellte neue System nutzen, und Kunden, die den bisherigen Kassenprozess nutzen, bedient werden können.
- Auch bei einem einzelnen Kunden lassen sich der bisherige und der neue Kassenprozess verzahnen. Dadurch ist es z.B. möglich Obst und Gemüse weiterhin an der Kasse abzuwiegen und eine Alterskontrolle bei Alkohol und Tabakwaren durchzuführen.
- Im Gegensatz zu einem reinen Selbstbedienungssystem besteht weiterhin der direkte Kontakt zwischen Kunde und Kassierer an der Kasse. Dies ist für die Kundenbindung vorteilhaft und bietet ein gewisses Maß an Kontrollmöglichkeiten und Abschreckung gegenüber Diebstahl.

Zweckmäßigerweise ist das mobile elektronische Gerät ein geeignetes Gerät, das die meisten Personen ohnehin besitzen oder in Zukunft besitzen werden, also ein Smartphone oder ein Tablet oder eine Smartwatch oder ein Smart-Glass in Kombination mit einem Smartphone oder Tablet oder ein ähnliches tragbares Gerät mit Kamera und Bildschirm. Eine zusätzliche Zeitersparnis an der Kasse lässt sich dadurch erreichen, dass das mobile elektronische Gerät weitere Informationen für die Kasse, z.B. über eine Kunden-Treuekarte, in dem 2D-Code kodiert und das Scanerweiterungs-Modul diese Informationen dekodiert und in der von der Kasse erwarteten Form an das Kassensystem sendet. Um weitergehende Datenauswertungen zu ermöglichen kann das mobile elektronische Gerät zusätzlich weitere Informationen für Datenauswertungszwecke, z.B. eine Einkaufs-Identifikationsnummer, in dem 2D-Code kodieren und das Scanerweiterungs-Modul diese Informationen dekodieren, die Informationen persistieren und ein Auslesen über die zusätzliche Datenschnittstelle ermöglichen. Reicht die Speicherkapazität eines 2D-Codes nicht aus, um alle relevanten Daten zu kodieren, so kann das mobile elektronische Gerät die Daten in mehrere 2D-Codes kodieren und die Vielzahl von 2D-Codes simultan und/oder nacheinander anzeigen und das Scanerweiterungs-Modul die Vielzahl der 2D-Codes einscannen und dekodieren. Die Kassensystem-Schnittstelle, an die das Scanerweiterungs-Modul angeschlossen wird, ist vorzugsweise eine Schnittstelle für einen Kassensystem-Handscanner und/oder eine Kassensystem-Tastatur, da diese Schnittstellen üblicherweise zur Übertragung von Artikeldaten an das Kassensystem genutzt werden und eine einfache Anschlussmöglichkeit bieten. Das Scanerweiterungs-Modul kann neben einer Bedienkasse, die von einem Kassierer bedient wird, auch an eine Selbstbedienungskasse angeschlossen werden. Vorzugsweise ist die Scaneinheit des Scanerweiterungs-Moduls ein Handscanner oder ein stationärer Scanner oder ein anderer elektrooptischer Scanner mit Scannersensor. In einer bevorzugten Ausführungsform sind die Berechnungseinheit und die Speichereinheit des Scanerweiterungs-Moduls als Minicomputer oder als eine in den Scanner integrierte Rechnerkomponente oder als ein ähnlicher Rechner mit den notwendigen Schnittstellen, wobei die Datenschnittstelle vorzugsweise eine Netzwerkschnittstelle ist, die ein Senden der Daten an einen Backend-Server ermöglicht, gestaltet oder die Berechnungseinheit und die Speichereinheit werden nicht als Bestandteil des Scanerweiterungs-Moduls, sondern als Softwareerweiterung des gewöhnlichen Kassensystems realisiert.

Ein Ausführungsbeispiel der Erfindung wird anhand der beigefügten Zeichnungen veranschaulicht und anschließend erläutert. Das System besteht aus zwei Komponenten. Die erste Komponente ist das, mit einer entsprechenden Software ausgestattete, vom Kunden selbst mitgebrachte, mobile elektronische Gerät, welches in diesem Beispiel als Smartphone, das mit einer sog. mobilen App ausgestattet ist, realisiert ist. Die zweite Komponente ist das Scanerweiterungs-Modul für Kassensysteme, die in diesem Beispiel an ein gewöhnliches Bedienkassensystem angeschlossen ist.

Es zeigt:

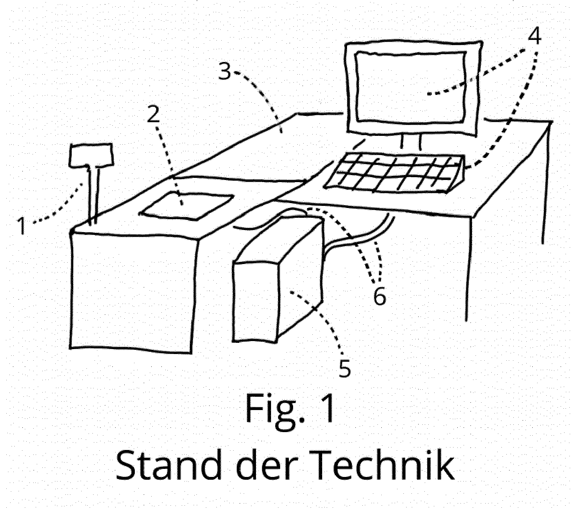

- Fig. 1: ein typisches gewöhnliches Kassensystem eines Einzelhandelsmarkts mit folgenden Bestandteilen: Kundendisplay (1), Kassen-Scaneinheit (2), Kassenband (3), Kassen-Bedieneinheiten (Bildschirm und Tastatur) (4) und Kassenrechner (5) mit Anschlüssen zu den anderen Kassenbestandteilen (6).

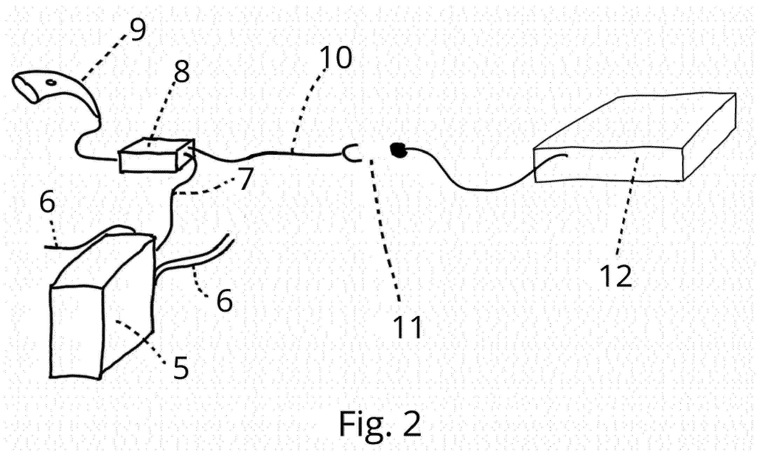

- Fig. 2: das Plug&Play-Scanerweiterungs-Modul, wobei das Scanerweiterungs-Modul eine Hardware ist, für gewöhnliche Kassensysteme in einer Ausprägung mit folgenden Bestandteilen: Kassenrechner (5) und bisherige Anschlüsse (6), Anschluss des Scanerweiterungs-Moduls an eine übliche Kassensystemschnittstelle, z.B. USB oder seriell, (7), geeignet programmierter Minicomputer, der Berechnungseinheit und Speichereinheit des Scanerweiterungs-Moduls beinhaltet, (8), 2D-Handscanner als Scaneinheit des Scanerweiterungs-Moduls (9), Netzwerkanschluss als Datenschnittstelle des Scanerweiterungs-Moduls (10), Senden von Daten an einen Backendserver, z.B. über Internet, (11), Backendserver zur Datenauswertung (12).

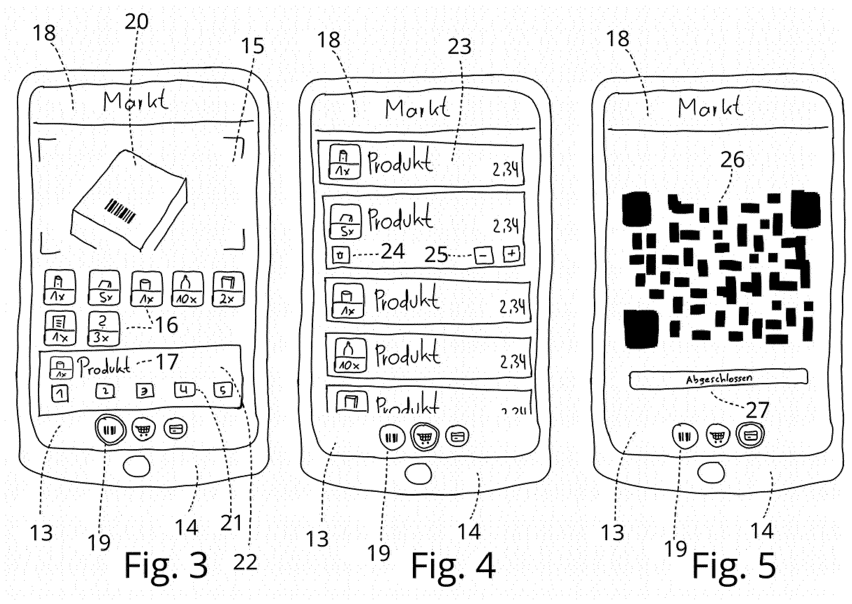

- Fig. 3: den Bildschirminhalt der mobilen App auf dem Bildschirm (13) des vom Kunden selbst mitgebrachten Smartphones (14) beim Einscannen eines Artikels: Scan-Bereich, mit dem mit Hilfe der Smartphone-Kamera Barcode-Symbole eingescannt werden können, (15), kompakte Darstellung des Warenkorbs (16), Anzeige des aktuell eingescannten Artikels (17), Titelleiste mit Informationen, z.B. zum aktuellen Markt, (18), Bildschirm-Navigationselemente der App (19), Artikel mit Barcode-Symbol (20), Bedienelemente zur Auswahl der Anzahl des aktuell eingescannten Artikels (21), Bestätigungsbereich nach dem Einscannen eines Artikels (22).
- Fig. 4: den Bildschirminhalt der mobilen App auf dem Bildschirm (13) des vom Kunden selbst mitgebrachten Smartphones (14) beim Anzeigen des Warenkorbs: Titelleiste mit Informationen, z.B. zum aktuellen Markt, (18), Bildschirm-Navigationselemente der App (19), Anzeige mit ausführlichen Informationen zu einem Artikel des Warenkorbs (23), Bedienelement zum Löschen eines Artikels (24), Bedienelement zum Verändern der Anzahl eines Artikels (25).
- Fig. 5: den Bildschirminhalt der mobilen App auf dem Bildschirm (13) des vom Kunden selbst mitgebrachten Smartphones (14) nach der Kodierung des Warenkorbs in einem 2D-Code: Titelleiste mit Informationen, z.B. zum aktuellen Markt, (18), Bildschirm-Navigationselemente der App (19), QR-Code, welcher die Artikelidentifikationsnummern mit der Anzahl der zur jeweiligen Artikelidentifikationsnummer gehörenden Artikel des Warenkorbs sowie weitere Informationen für das Kassensystem und für Datenauswertungen kodiert, (26), Bedienelement zum Abschließen des Einkaufs (27).

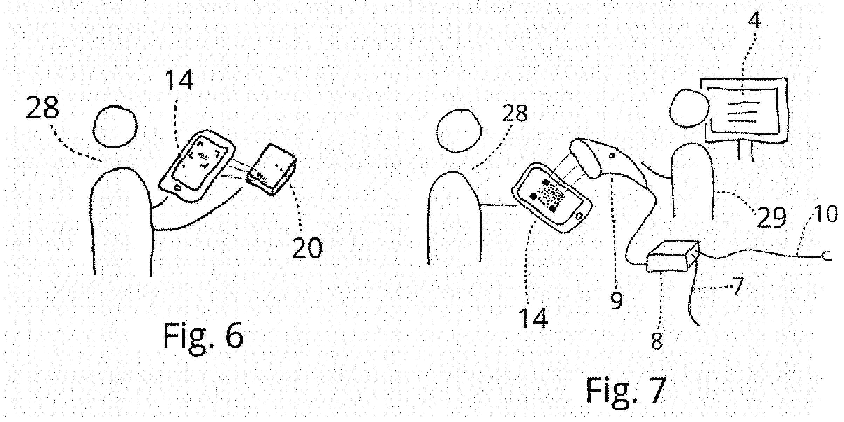

- Fig. 6: den Kunden (28) beim Einscannen des Barcode-Symbols eines Artikels (20) mit seinem selbst mitgebrachten Smartphone (14) am Ort des Artikels im Markt.
- Fig. 7: den Kassierer (29) an der Marktkasse beim Einscannen des QR-Codes vom Smartphone (14) des Kunden (28) mit dem 2D-Handscanner des Scanerweiterungs-Moduls (9), wobei der Minicomputer des Scanerweiterungs-Moduls (8) die Daten des QR-Codes verarbeitet und speichert und die für das Kassensystem bestimmten Daten über die Kassensystemschnittstelle (7) an das Kassensystem sendet, auf dessen Bildschirm (4) dann alle Artikel des Warenkorbs mit Anzahl angezeigt werden, und die zu Datenauswertungszwecken gespeicherten Daten über die Netzwerkschnittstelle (10) an den Backendserver sendet.

Mobile App auf kundeneigenem Smartphone: Ein Kunde, der das System nutzt, besitzt ein eigenes Smartphone. Der Kunde muss zunächst einmalig eine für die Erfindung entwickelte mobile App auf seinem Smartphone installieren. Diese stellt alle notwendigen Funktionalitäten auf dem Smartphone des Kunden zur Verfügung. Eine Registrierung des Kunden ist nicht notwendig. Der Kunde kann dann nach erfolgter Auswahl des teilnehmenden Marktes, welcher das System einsetzt, die Einkaufsartikel (sowie Rabattcoupons und Ähnliches) mit seinem Smartphone bereits während des Einkaufens am Ort des Artikels im Markt, z.B. bevor er den Artikel in seine Einkaufstasche einpackt, in das Smartphone einlesen, indem er über die Smartphone-Kamera mit der installierten App das Barcode-Symbol des Artikels scannt. Das Barcode-Symbol wird durch die App zur Artikelidentifikationsnummer des Artikels dekodiert. Die Artikelidentifikationsnummer kann eine EAN-Nummer oder eine marktspezifische Artikelnummer sein (eine Artikelnummer wird z.B. bei Gebinden genutzt, wobei der Kunde am Smartphone auswählen kann, ob es sich bspw. um eine Flasche oder einen Kasten Bier handelt). Alle Artikel werden anhand ihrer Artikelidentifikationsnummer in einem digitalen Warenkorb der App gespeichert und können angesehen und verwaltet werden. Der Kunde kann in dem Warenkorb die Anzahl eines Artikels veränderen oder einen Artikel löschen und ggfs. weitere Informationen zu Artikeln abrufen. Bestätigt der Kunde, dass alle gewünschten Artikel im Warenkorb gespeichert sind, wird von der App ein 2D-Code, typischerweise ein QR-Code, erzeugt, in dem alle relevanten Informationen des Warenkorbs, z.B. in Form einer Blockkodierung dargestellt, kodiert sind, insbesondere also eine eindeutige Artikelidentifikationsnummer jedes Artikels des Warenkorbs und die Anzahl jedes Artikels. Zudem können weitere relevante Informationen in dem 2D-Code gespeichert werden. Hierbei kann es sich um für die Kasse notwendige Informationen wie eine Treuekarteninformation über den Kunden handeln. Zusätzlich können aber auch Informationen übertragen werden, die nur von der zweiten Komponente weiterverarbeitet werden, wie z.B. eine identifizierende Nummer des gesamten Einkaufs. Der 2D-Code, der sämtliche Informationen enthält, wird auf dem Bildschirm des Smartphones angezeigt. Mit dem angezeigten 2D-Code kann der Kunde schließlich an eine ganz normale Bedienkasse gehen, sofern dort die folgende zweite Komponente unseres Systems vorhanden ist. Im Anschluss an den Einkauf können sämtliche von der App erfassten Daten, z.B. auch die Scanzeitpunkte einzelner Artikel, asynchron auf unsere Serversysteme im Hintergrund übertragen werden, sobald das Smartphone einen Onlinezugang hat.

Scanerweiterungs-Modul für übliche Marktkasse: Für die Erfindung wurde ein spezielles Plug&Play-Scanerweiterungs-Modul für ganz normale, bestehende Kassensysteme entwickelt, die an die üblichen Kassenschnittstellen wie USB-Anschluss oder seriellen Anschluss angeschlossen werden kann ohne tiefgreifend in das Kassensystem eingreifen zu müssen. Gegenüber dem Kassensystem gibt sich das Scanerweiterungs-Modul als einfacher Handscanner oder als Tastatur aus. Das Scanerweiterungs-Modul ist also ein einfaches Peripheriegerät, das wie ein Handscanner oder eine Tastatur, ggfs. durch eine einmalige Freischaltung, an das Kassensystem angeschlossen werden kann. Das Scanerweiterungs-Modul besteht aus einer Scaneinheit, hier einem 2D-Handscanner, der 2D-Codes einlesen kann, und einem eigenen an den Scanner angeschlossenen Minicomputer. Der Minicomputer umfasst eine entsprechend programmierte Berechnungseinheit, geeignete Anschlussschnittstellen für das Kassensystem und eine Speichereinheit, mit der Daten persistiert und gespeicherte Daten über eine weitere Datenschnittstelle, z.B. eine Netzwerkschnittstelle, zu Datenauswertungszwecken ausgelesen werden können. Der Kunde zeigt an einer mit diesem Scanerweiterungs-Modul ausgerüsteten Kasse den auf dem Bildschirm seines Smartphones angezeigten 2D-Code vor. Der Kassierer scannt diesen 2D-Code mit der Scaneinheit des Scanerweiterungs-Moduls ein. Die Scaneinheit dekodiert den 2D-Code. Die im 2D-Code enthaltenen Informationen werden dann von der Berechnungseinheit des Scanerweiterungs-Moduls verarbeitet. Es werden sowohl die Artikelidentifikationsnummern der einzelnen Artikel des Warenkorbs des Kunden und deren Anzahlen, wie auch die zusätzlich enthaltenen Informationen extrahiert. Die Artikelidentifikationsnummern der einzelnen Artikel unter Berücksichtigung der jeweiligen Anzahl, sowie die weiteren für die Kasse bestimmten Daten (z.B. Treuekarteninformation) werden in einer von der Kasse erwarteten Form an das angeschlossene Kassensystem gesendet. Der an die Kasse gesendete Datenstrom entspricht also im Wesentlichen einer Abfolge von Daten, die von einem normalen Handscanner bzw. einer Tastatur beim manuellen sequentiellen Scannen bzw. Eingeben aller Artikel des Warenkorbs oder anderer Informationen an die Kasse übermittelt wird. Für das Kassensystem wirkt es anschaulich gesprochen so, als hätte der Kassierer alle Artikel des gesamten Warenkorbs sowie die weiteren Informationen in rasender Geschwindigkeit eingescannt oder eingegeben. Der Datenstrom wird aktiv von der Berechnungseinheit gesendet und gesteuert und kann z.B. für eine Altersprüfung zeitweise pausiert werden. Bestimmte im 2D-Code enthaltene Informationen, insbesondere diejenigen, die von der Kasse nicht verarbeitet werden können, verbleiben für eine spätere Analyse in der Speichereinheit der Scanerweiterung. Diese Daten können zu einem späteren Zeitpunkt über die zusätzliche Datenschnittstelle ausgelesen und weiterverarbeitet werden, wobei die Daten ggfs. auf einem unserer Serversysteme z.B. über eine Einkaufs-Identifikationsnummer mit Daten der mobilen App kombiniert werden.

Hat die Berechnungseinheit des Scanerweiterungs-Moduls schließlich alle Daten an das Kassensystem übermittelt, so werden sie von dem Kassensystem wie üblich verarbeitet. Normalerweise wird hierbei jedem Artikel ein Preis zugeordnet und ein Gesamtpreis berechnet. Die Informationen über Artikel und Preise werden dem Kassierer üblicherweise angezeigt. Der Kassierer kann in dieser Situation alle Aktionen vornehmen, die ihm auch sonst zur Verfügung stehen, z.B. weitere Artikel des Kunden, die ggfs. an der Kasse gewogen werden müssen, z.B. Obst, hinzufügen oder eine Altersprüfung des Kunden bei Artikeln wie Alkohol durchführen. Schließlich kann der Kassierer den Bezahlvorgang genauso durchführen wie bei dem bisherigen Kassenprozess vorgesehen, z.B. eine Barzahlung des Kunden entgegennehmen. Selbiges gilt für das Erstellen einer Rechnung für den Kunden sowie das Verbuchen des Einkaufs im Warenwirtschaftssystem des Marktes. Diese Aufgaben werden ohne Änderung von der bestehenden Kasse übernommen. Für den Kunden funktioniert der von unserem System vorgesehene Kassenprozess also schnell und einfach: Er muss sein Smartphone einmal vorzeigen und kann dann unmittelbar wie gewohnt bezahlen ohne aber seine Einkäufe aus- oder einräumen zu müssen.

Gemäß einem Aspekt der Erfindung generiert ein Smartphone (14) des Kunden (28) einen 2D-Code, in dem die gesammelten Artikelidentifikationsnummern codiert sind. Dieser 2D-Code wird durch den Kassierer (29) mittels 2D-Handscanner des Scanerweiterungs-Moduls (9) erfasst und an das Scanerweiterungs-Modul (8) übertragen. Hier werden die empfangenen Daten verarbeitet, gespeichert und die wesentlichen Informationen (Artikelidentifikationsnummern, ggf. mit Häufigkeiten) über eine Kassensystemschnittstelle (7), bspw. Tastatur- und Scannerschnittstelle, an das bestehende Kassensystem (4) gesendet. Dieses übernimmt dann wie heute den eigentlichen Bezahlvorgang.

## Patentansprüche

1. Scanerweiterungs-Modul für ein Kassensystem, umfassend:
• eine Schnittstelle zum Anschließen an ein Kassensystem;
• eine Scaneinheit zum Einscannen eines 2D-Codes; wobei der 2D-Code Informationen zu einem Warenkorb für die Aufnahme mehrerer Artikelidentifikationsnummern umfasst, die jeweils einem Artikel zugeordnet sind;
• eine Berechnungseinheit, die Berechnungseinheit umfassend:
• eine Einheit zum Dekodieren und Verarbeiten des in dem 2D-Code enthaltenen Warenkorbs mit den jeweiligen Artikelidentifikationsnummern und
• eine Einheit zum Senden der Artikelidentifikationsnummern an ein an die Schnittstelle angeschlossenes Kassensystem.

2. Scanerweiterungs-Modul für ein Kassensystem gemäß Anspruch 1, wobei die Berechnungseinheit konfiguriert ist durch das Senden der Artikelidentifikationsnummern eine Eingabe der jeweiligen Artikel in das Kassensystem erfolgen zu lassen, die einer manuellen Eingabe der jeweiligen Artikel in das Kassensystem entspricht.

3. Scanerweiterungs-Modul für ein Kassensystem gemäß Anspruch 1 oder 2, wobei die Berechnungseinheit und die Speichereinheit als Minicomputer oder als Rechnerkomponente in der Scaneinheit oder als Rechner ausgebildet sind.

4. Scanerweiterungs-Modul für ein Kassensystem nach einem der vorhergehenden Ansprüche, wobei die Scaneinheit konfiguriert ist, eine Vielzahl von 2D-Codes simultan einzuscannen.

5. Scanerweiterungs-Modul für ein Kassensystem nach einem der vorhergehenden Ansprüche, wobei die Berechnungseinheit konfiguriert ist aus dem 2D-Code weitere Daten zu dekodieren und an das Kassensystem zu senden, wobei die Daten beispielsweise enthalten können: Kundenidentifikation; Kundenkarteninformation; Bezahlsysteminformation; Einkaufsidentifikation.

6. Scanerweiterungs-Modul für ein Kassensystem nach einem der vorhergehenden Ansprüche, wobei das Scanerweiterungs-Modul eine Hardware ist, wobei die Schnittstelle als Datenschnittstelle oder als Netzwerkschnittstelle ausgebildet ist, welche ein Kommunikationsprotokoll mindestens einer Kassen-Komponente verwendet, wobei die mindestens eine Kassen-Komponente vorzugsweise ein Kassensystem-Handscanner, eine Kassensystem-Tastatur, eine Bedienkasse und/oder eine Selbstbedienungskasse umfasst, und wobei die Schnittstelle an die für die mindestens eine Kassen-Komponente vorgesehene Schnittstellen anschließbar ist.

7. Scanerweiterungs-Modul für ein Kassensystem nach einem der vorhergehenden Ansprüche, wobei das Scanerweiterungs-Modul eine Hardware ist, wobei eine zusätzliche Datenschnittstelle zum Auslesen der Information vorgesehen ist.

8. Scanerweiterungs-Modul für ein Kassensystem nach einem der vorhergehenden Ansprüche, wobei das Scanerweiterungs-Modul eine Hardware ist, wobei die Scaneinheit als Handscanner oder als stationärer Scanner oder als elektrooptischer Scanner mit Scansensor ausgebildet ist.

9. Kassier-Einrichtung mit einem Scanerweiterungs-Modul nach einem der vorhergehenden Ansprüche, wobei ein mobiles elektronischen Gerät mit
• einem Scanner,
• einem Daten-Speicher und
• einem Gerätebildschirm vorgesehen ist,
wobei das mobile elektronische Gerät konfiguriert ist zum Durchführen der folgenden Schritte:
• Einscannen von Barcode-Symbolen;
• Dekodieren der Barcode-Symbole in Artikelidentifikationsnummern;
• Speichern und Verwalten der Artikelidentifikationsnummern;
• Kodieren der Artikelidentifikationsnummern in einen 2D-Code;
• Anzeigen des 2D-Codes auf dem Geräte-Bildschirm, wobei der 2D-Code für die Scaneinheit des Scanerweiterungs-Moduls lesbar ausgebildet ist.

10. Verfahren zum Selbstscannen für ein Kassensystem, das Verfahren umfassend:
• Einscannen eines 2D-Codes, wobei der 2D-Code Informationen zu einem Warenkorb für die Aufnahme mehrerer Artikelidentifikationsnummern umfasst, die jeweils einem Artikel zugeordnet sind;
• Dekodieren und Verarbeiten des in dem 2D-Code enthaltenen Warenkorbs mit den jeweiligen Artikelidentifikationsnummern;
• Senden der dekodierten Artikelidentifikationsnummern an ein Kassensystem,
• Speichern, insbesondere Persistieren der Information.

11. Verfahren zum Selbstscannen für ein Kassensystem nach Anspruch 10, wobei durch das Senden der Artikelidentifikationsnummern eine Eingabe jeder Artikel in das Kassensystem erfolgt, die einer manuellen Eingabe der jeweiligen Artikel in das Kassensystem entspricht.

12. Verwendung eines Scanerweiterungs-Moduls nach einem der Ansprüche 1-8 für das Verfahren nach Anspruch 10.
